# EUROPÄISCHE PATENTANMELDUNG

(11) **EP 4 066 632 A1**
(43) Veröffentlichungstag der Anmeldung: **05.10.2022**
(21) Anmeldenummer: 21166714.2
(22) Anmeldetag: 01.04.2021
(51) Int. Cl.: A01K 27/00

(54) **TIERHALTEEINRICHTUNG**

(71) Anmelder: UNLCKED UG (haftungsbeschränkt), 22299 Hamburg (DE)
(72) Erfinder: Höpcke, Klaas Gunnar, 20146 Hamburg (DE)
(74) Vertreter: Glück Kritzenberger Patentanwälte PartGmbB

(57) **Zusammenfassung**

Die Erfindung betrifft eine Tierhalteeinrichtung (10), umfassend ein Haltegeschirr zum Festlegen an dem Tier, welches Haltegeschirr wenigstens ein Befestigungselement (12) zum Festlegen eines länglichen Halteelements (20) aufweist, wobei das Befestigungselement (12) und das Haltelement (20) über einen Auslösemechanismus (14) verbunden sind. Der Auslösemechanismus (14) weist einen Rahmen (26) mit einem daran ausgebildeten Befestigungsteil (24) und einem Halteteil (28) auf, wobei eines der beiden Teile (24, 28) an dem Befestigungselement und das andere der beiden Teile (30, 24) am Halteelement (20) befestigt ist. Das Halteteil (28) umfasst einen Schwenkbügel (32), welches an dem Rahmen (26) um eine Schwenkachse (30) zwischen einer Arretierstellung und einer Auslösestellung schwenkbar gelagert ist, wobei die Arretierstellung des Schwenkbügels (32) durch eine in Verbindung mit dem Rahmen (26) angeordnete Raste (36) des Halteelements (28) gesichert ist. Die Schwenkachse (30) ist gegen die Kraft eines Federmechanismus (40) beweglich (34) an dem Rahmen (26) mittels einer Führung (34) geführt, so dass sich der Abstand der Schwenkachse (30) von dem Befestigungsteil (24) bei Aufbringen einer Zuglast zwischen Halteteil (28) und Befestigungsteil (24) ändert, wobei der Schwenkbügel (32) derart mit der Raste (36) zusammenwirkt, dass der Schwenkbügel (32) aufgrund der Bewegung der Schwenkachse (30) bei Überschreiten einer definierten Auslösezugkraft von der Raste (36) freikommt.

## Beschreibung

Die vorliegende Erfindung betrifft eine Tierhalte- bzw. Tierführungseinrichtung.

Tierhalteeinrichtungen weisen üblicherweise ein Haltegeschirr für das Tier auf, das aus Seil, Riemen und/oder Ketten besteht. Ein typisches Haltegeschirr für ein Pferd ist ein Halfter. Ein derartiges Halfter wird bekannter Weise mittels eines Panikhakens mit einer Führungsleine verbunden. Der Panikhaken stellt einen Auslösemechanismus dar, der bei Überschreiten einer bestimmten Zugkraft aufgeht, um so die Verbindung zwischen Haltegeschirr und Halteleine zu lösen, was wiederum der Vermeidung einer Verletzung von Mensch und Tier dient.

Es ist Aufgabe der Erfindung, eine Tierhalteeinrichtung zu schaffen, bei welcher der Auslösemechanismus einfach und betriebssicher gestaltet ist. Diese Aufgabe wird mit einer Tierhalteeinrichtung gemäß Anspruch 1 gelöst. Vorteilhafte Weiterbildungen der Erfindung sind Gegenstand der Unteransprüche.

Erfindungsgemäß umfasst die Tierhalteeinrichtung ein Haltegeschirr zum Festlegen an dem Tier, welches Haltegeschirr wenigstens ein Befestigungselement zum Festlegen eines insbesondere länglichen Halteelements aufweist, wobei zwischen dem Befestigungselement und dem Haltelement ein Auslösemechanismus angeordnet ist.

Der erfindungsgemäße Auslösemechanismus weist einen Rahmen mit einem daran ausgebildeten Befestigungsteil und einem Halteteil auf, welche zur Befestigung das Befestigungselements und des Halteelements an dem Auslösemechanismus dienen.

Das Halteteil enthält einen Schwenkbügel, welcher an dem Rahmen um eine Schwenkachse zwischen einer Arretierstellung und einer Auslösestellung schwenkbar gelagert ist. Hierbei ist die Arretierstellung des Schwenkbügels durch eine in Verbindung mit dem Rahmen angeordnete Raste des Halteteils gesichert.

Die Schwenkachse ist gegen die Kraft eines Federmechanismus beweglich an dem Rahmen mittels einer Führung geführt. Der Federmechanismus besteht beispielsweise aus einer oder mehreren Schraubenfedern oder anderen reversibel elastischen Elementen. Die Führung erlaubt eine Bewegung der Schwenkachse in Zugrichtung, so dass sich der Abstand der Schwenkachse von dem Befestigungsteil bei Aufbringen einer Zuglast zwischen Halteteil und Befestigungsteil ändert, wobei der Schwenkbügel derart mit der Raste zusammenwirkt, dass der Schwenkbügel aufgrund der Bewegung der Schwenkachse in ihrer Führung bei Überschreiten einer definierten Auslösezugkraft von der Raste freikommt.

Die erfindungsgemäße Tierhalteeinrichtung ermöglicht eine definierte Auslösekraft, die auch bei oftmaligem Gebrauch erhalten bleibt. Zudem ist die Tierhalteeirichtung günstig herstellbar. Vorzugsweise ist der Rahmen länglich ausgebildet und weist eine in Längsrichtung erstreckende Führung für die Schwenkachse des Schwenkbügels auf. Die Längserstreckung des Rahmens entspricht der Zugrichtung, was praktisch in der Handhabung ist und eine leichtere Unterbringung des Federmechanismus ermöglicht, der ja einen gewissen Auslöseweg bereitstellen muss.

Vorzugsweise ist die Führung durch sich in Längsrichtung (I) des Rahmens erstreckende erste Langlöcher gebildet. Dies stellt eine technisch einfach zu realisierende Lösung dar, die betriebssicher ist und einen ausreichend Bewegungs- und Auslöseweg für die Schwenkachse bietet.

Vorzugsweise sind an einem Längsende des Rahmens das Halteteil und an dessen anderem Längsende das Befestigungsteil angeordnet, so dass die Längsrichtung des Rahmens Übereinstimmung mit der Zugrichtung ist.

Vorzugsweise nimmt der Rahmen den Federmechanismus auf und schützt diesen damit vor Außeneinflüssen, die einen Einfluss auf die Auslösezugkraft haben könnten.

Vorzugsweise ist die Raste an dem Rahmen in Zugrichtung zwischen einer Blockierstellung und einer Freigabestellung verschiebbar angeordnet. Während also für den Auslösemechanismus zugkraftbedingt Auslösekräfte von 100 N oder einem Vielfachen davon notwendig sind, kann eine manuelle Auslösung durch ein Verschieben der Raste, z.B. mit dem Daumen und geringem Kraftaufwand zwischen 0,1 und 1 N erfolgen.

Vorzugsweise wird hierbei die Raste durch ein Vorspannelement, z.B. eine Schraubenfeder in ihre Rast- oder Blockierstellung vorgespannt, so dass eine manuelle Auslösung der Raste, z.B. mit dem Daumen, deren Verschieben gegen die Kraft des Vorspannelements erfordert. Selbstverständlich ist die Federkonstante des Vorspannelements erheblich geringer, z.B. mindestens um den Faktor 10, als die des Federmechanismus.

Das Vorspannelement erstreckt sich vorzugsweise in Bewegungsrichtung der Raste und ist damit unter dem Hinblick der Kraftübertragung optimal wirksam.

In einer vorteilhaften Weiterbildung der Erfindung ist die Raste in einem den Rahmen umgebenden und an diesem verschiebbar gehaltenen Gehäuse integriert. Auf diese Weise umgibt das Gehäuse nicht nur den Federmechanismus und den Rahmen und schützt damit diese Teile vor Verschmutzung und Fremdeinwirkung, sondern das Gehäuse oder ein damit verbundenes Teil bildet die Raste. Zum manuellen Auslösen muss dann nur das Gehäuse in Freigabestellung gezogen bzw. geschoben werden. Eine derartige Ausführungsform mit einer in einem Gehäuse integrierten Raste ist auch formschön herstellbar.

Vorzugsweise ist das Gehäuse als längliches rechteckiges oder kreiszylindrisches Metall- oder Faserverbundgehäuse ausgebildet. Es ist damit leicht, robust und auch formschön herstellbar. In einer vorteilhaften Weiterbildung der Erfindung ist das Halteelement ein Haltestrick oder eine Haltestange.

Vorzugsweise ist das Geschirr ein strick-, riemen- und/oder kettenbasiertes Geschirr.

Vorzugsweise weist das Haltegeschirr als Befestigungselement einen Ring oder eine Öse auf, der/die in einfacher Weise mit dem Auslösemechanismus verbunden werden kann.

In einer vorteilhaften Weiterbildung der Erfindung ist das Befestigungsteil als Ring oder Öse ausgebildet und ist damit ebenfalls einfach mit dem Befestigungselement oder dem Halteelement verbindbar.

So kann vorzugsweise der Einstellmechanismus eine Stellachse umfassen, die mit dem unteren Ende des Federelements verbunden ist, und die in dem Gehäuse in Langlöchern derart geführt ist, dass sie in Längsrichtung des Gehäuses verstellbar ist. Die Stellachse ist an einem, insbesondere U-förmigen, Tragprofil gehalten, welches zentral einen Gewindebolzen drehfest aufnimmt, der sich zentral in Längsrichtung des Gehäuses von dem Tragprofil bis zum Boden des Gehäuses erstreckt. Der Gewindebolzen stützt sich dann am Boden ab oder durchsetzt eine am unteren Ende ausgebildete Querstrebe, die quer zur Längsrichtung an dem Gehäuse befestigt ist. Über eine betätigbare Stellmutter im Bodenbereich, die gegen den Boden oder die Querstrebe anliegt, lässt sich dann der Gewindebolzen mehr oder weniger weit in Richtung des Bodens des Gehäuses verstellen, womit das Federelement mehr oder weniger vorgespannt wird. Dieser gesamte Einstellmechanismus mit den Komponenten Stellachse, Tragprofil, Gewindebolzen, Boden oder Querstrebe und Stellmutter bildet die Aufhängung für das Federelement. An seiner Oberseite umgreift das Federelement die Schwenkachse des Schwenkbügels. Die Vorspannung des Federelements kann somit durch Rotieren der Stellmutter eingestellt werden und damit die Auslösezugkraft. Ein derartiger Einstellmechanismus ist technisch einfach zu realisieren, ist unkompliziert und betriebszuverlässig und ist in dem Gehäuse geschützt angeordnet. Vorzugsweise schließt das untere freie Ende des Gewindebolzens mehr oder weniger, je nach Einstellung, mit dem Boden des Gehäuses ab.

Alternativ zu der obigen Ausführungsform mit festem Gewindebolzen kann der dieser auch drehbar an dem Tragprofil gehalten sein und beispielsweise ein Inngewinde in der Querstrebe kämmen. Hier wäre eine Einstellung über eine Verdrehung des Gewindebolzens in dem Innengewinde der Querstrebe möglich. Vorzugsweise hat dieser dann an seinem freien zum Boden weisenden Ende eine Stellkontur, z.B. einen Schlitz, Kreuzschlitz, Innensechskant oder Außensechskant oder dergleichen. Auf diese Weise kann der Stellbolzen auf einfache Weise vom Boden des Gehäuses aus gedreht und damit die Auslösekraft eingestellt werden.

Vorzugsweise ist das untere Ende des Gewindebolzens mittels einer am Gehäuse festgelegten Querstrebe in Längsrichtung des Gehäuses festgelegt, weil diese durch entsprechende Dimensionierung effektiv und zuverlässig die auf das Federelement wirkende Vorspannkraft als auch die auf den Schwenkbügel wirkende Zugkraft aufnehmen kann. Die Befestigungsstrebe lässt sich einfach zum Beispiel in Perforierungen in den Seitenwänden des Gehäuses technisch einfach und funktionssicher festlegen und bietet somit eine gute Basis für die Krafteinleitung der oben genannten Kräfte.

In einer vorteilhaften Weiterbildung der Erfindung ist die Schwenkachse an einer Seite des Rahmens angeordnet. Das hat den Vorteil, dass der Schwenkbügel in seiner Schwenkbewegung sich über die gesamte Breite des Auslösemechanismus erstrecken kann und dass der Zugpunkt mittig ist. Die Verbindung zur mittig angeordneten Federeinrichtung erfolgt dann über wenigstens einen, vorzugsweise zwei Mitnehmerarme.

In einer vorteilhaften Ausführungsform der Erfindung hat der Federmechanismus wenigstens ein Federelement, das in dem Rahmen mittels einer Aufhängung befestigt ist, die durch eine stationäre Achse und eine bewegliche Achse gebildet ist, in die das Federelement eingehängt ist. Eine Dehnung des Federelements aufgrund einer Zugspannung zwischen Halteteil und Befestigungsteil führt somit zu einer Verschiebung der beweglichen Achse in zweiten Langlöchern, die als Führung in dem Rahmen ausgebildet sind, vorzugsweise in Längsrichtung des Auslösemechanismus. Vorzugsweise ist die bewegliche Achse an der der Schwenkachse zugewandten Seite des Federelements angeordnet.

Die bewegliche Achse ist mit der Schwenkachse vorzugsweise über wenigstens einen Mitnehmerarm verbunden, was einfach zu realisieren ist, um die Kraft von dem Halteteil auf den Federmechanismus zu übertragen. Auf -diese Weise kann die Schwenkachse bei gleichzeitiger zentraler Anordnung des Federelements des Federmechanismus seitlich am Rahmen angeordnet werden, was einen größeren Überdeckungsbereich des Schwenkbügels ermöglicht.

Vorzugsweise verlaufen die Führungen für die bewegliche Achse und die Schwenkachse parallel zueinander, so dass eine Dehnung des Federelements 1:1 in eine Bewegung der Schwenkachse übertragen wird.

Vorzugsweise kann hierbei ein Einstellmechanismus für die Vorspannung des Federmechanismus im Bereich der Aufhängung, insbesondere im Bereich der stationären Achse vorgesehen werden. Über den Einstellmechanismus kann dann beispielsweise der Abstand der stationären Achse von der Führung der beweglichen Achse einstellbar werden, und damit die Grundspannung des Federelements. Durch die Einstellung der stationären Achse in Längsrichtung des Gehäuses, z.B. mittels einer Führung und einer Stellschraube kann somit der untere Aufhängungspunkt des Federelements im Rahmen in Längsrichtung des Federelements eingestellt werden. Auf diese Weise kann die Vorspannung auf das Federelement und damit die Auslösezugkraft leicht eingestellt werden.

Der Schwenkbügel ist vorzugsweise über eine Federeinrichtung, insbesondere eine Rotationsfeder im Bereich der Schwenkachse, in seine Auslösestellung vorgespannt. Dies erleichtert die Handhabung insbesondere beim manuellen Öffnen des Schwenkbügel durch Runterschieben der Raste.

Die Erfindung manifestiert sich auch in der Verwendung des oben beschriebenen erfindungsgemäßen Auslösemechanismus als Panikhaken einer Tierhalteeinrichtung.

Es ist für dem Fachmann selbstverständlich, dass die oben beschriebenen Ausführungsformen der Erfindung in beliebiger Weise miteinander kombiniert werden können.

Folgende Ausdrücke werden in der Anmeldung synonym verwendet: Bügelelement - Schwenkbügel; Tierhalteeinrichtung - Tierführungseinrichtung; Auslösemechanismus - Panikhaken; erstes Ende - oberes Ende; zweites Ende - unteres Ende; Befestigungsteil - Befestigungsöse - Befestigungsbohrung;

Die Erfindung wird nachfolgend beispielsweise anhand der schematischen Zeichnung beschrieben. In dieser zeigen:
- Fig. 1: eine perspektivische Ansichten einer Tierhalteeinrichtung mit Halfter, Auslösemechanismus und Halteleine,
- Fig. 2: eine perspektivische Ansichten des Auslösemechanismus aus Fig. 1,
- Fig. 3: eine geschnittene Seitenansicht des Auslösemechanismus aus Fig. 1,
- Fig. 4: eine Seitenansicht des Auslösemechanismus aus Fig. 1,
- Fig. 5: eine Vorderansicht des Auslösemechanismus aus Fig. 1,
- Fig. 6: eine perspektivische Ansicht des Auslösemechanismus aus Fig. 1 in Auslösestellung,
- Fig. 7: eine perspektivische Ansicht des Auslösemechanismus aus Fig. 1 in Arretierstellung,
- Fig. 8: eine perspektivische Ansicht eines zweistufigen Auslösemechanismus in seitlicher Perspektive, und
- Fig. 9: eine geschnittene Seitenansicht des zweistufigen Auslösemechanismus aus Fig. 8.

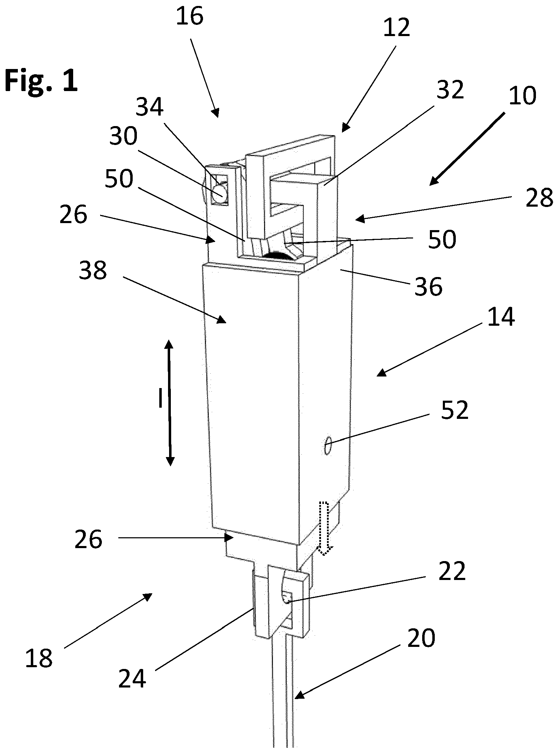

Fig. 1 zeigt eine erfindungsgemäße Tierhalteeinrichtung 10 mit einem als Befestigungsring 12 ausgebildeten Befestigungselement eines Haltegeschirrs (nicht dargestellt), einem länglichen Auslösemechanismus 14, dessen erstes Ende 16 mit dem Befestigungsring 12 lösbar verbunden ist, und einem als Haltestange 20 ausgebildeten Halteelement. Das Halteelement 20 hat eine obere Schlaufe oder Ring 22, der mit einem an dem zweiten unteren Ende 18 des Auslösemechanismus ausgebildeten Befestigungsteil 24, z.B. in Form einer Öse oder Bohrung, verbunden ist. Der Auslösemechanismus wird in der Regel in der dargestellten Orientierung verwendet.

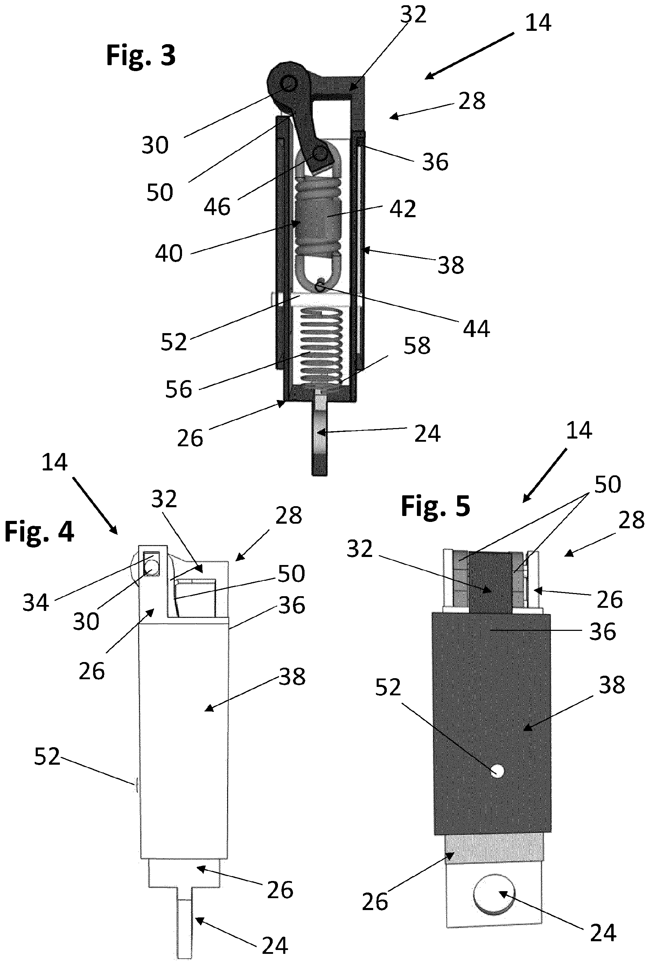

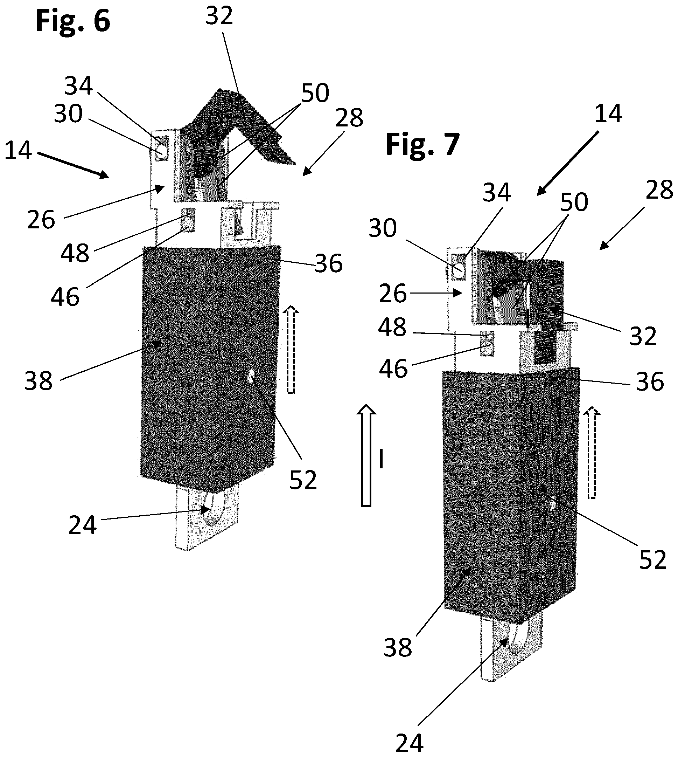

Der in den Figuren 1 bis 7 dargestellte Auslösemechanismus 14 umfasst einen Rahmen 26, an dessen erstem (oberen) Ende 16 ein Halteteil 28 zur Verbindung mit dem Befestigungsring 12 des Haltegeschirrs angeordnet ist. Das Halteteil 28 umfasst einen um eine Schwenkachse 30 zwischen einer Arretierstellung (Fig. 1 bis 5 und 7) und einer Auslösestellung (Fig. 6) schwenkbar gelagerten Schwenkbügel 32. Die Schwenkachse 30 ist in einer sich in Längsrichtung l des Rahmens 26 erstreckende Führung 34 geführt, welche durch erste Langlöcher 34 in gegenüberliegenden Seitenwänden des Rahmens 26 gebildet ist. Der Schwenkbügel 32 wird in seiner Arretierstellung durch eine Raste 36 des Halteteils 28 arretiert, die integriert an der Oberkante eines Gehäuses 38 ausgebildet ist, welches relativ zum Rahmen manuell entsprechend dem gestrichelten Pfeil nach unten schiebbar ist, um den Schwenkbügel 32 freizugeben. Optional kann der Schwenkbügel 32 durch eine im Bereich der Schwenkachse 30 angeordnete Rotationsfeder (nicht dargestellt) in seine Auslösestellung vorgespannt sein, womit der Schwenkbügel nach dem Herunterschieben des Gehäuses 38 und dem entsprechenden Freigeben durch die Raste 36 selbsttätig in seine Auslösestellung aufschnappt.

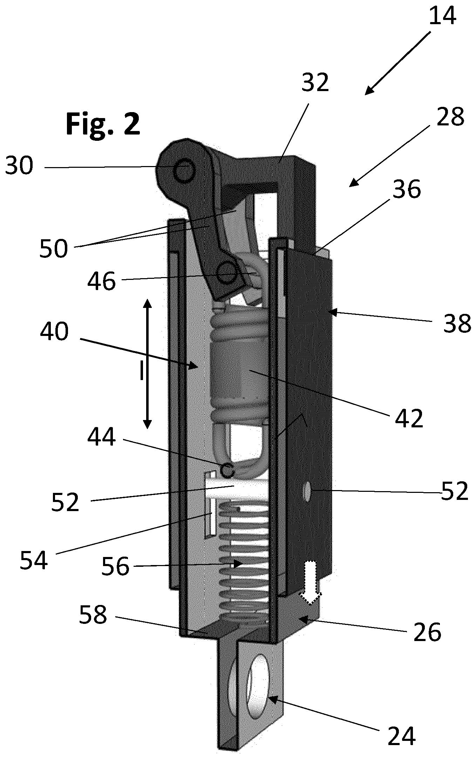

Die Funktionsweise des Auslösemechanismus 14 wird insbesondere mit Bezug zu Fig. 2 detaillierter beschrieben.

Kernstück des Auslösemechanismus 14 ist ein Federmechanismus 40, der im Inneren des Rahmens 26 angeordnet und zudem von dem Gehäuse 38 umschlossen und geschützt ist. Der Federmechanismus 40 enthält eine sich in Längsrichtung I des Auslösemechanismus 14 erstreckende erste Schraubenfeder 42, deren eines (unteres) Ende an einer stationäre Achse 44 am Rahmen 26 verankert ist. Das andere (obere) Ende der ersten Schraubenfeder 42 ist an einer beweglichen Achse 46 aufgehängt, die über zweite Langlöcher 48 (Fig. 6 und 7) in gegenüberliegenden Seitenwänden des Rahmens 26 in Längsrichtung I beweglich geführt ist. Die bewegliche Achse 46 ist über zwei voneinander beabstandete Mitnehmerarme 50 mit der Schwenkachse 30 verbunden, so dass eine Bewegung der beweglichen Achse 46 in Längsrichtung in eine entsprechende Bewegung der Schwenkachse 30 in ihren ersten Langlöchern 34 übertragen wird. An der Schwenkachse 30 ist der Schwenkbügel 32 zwischen den beiden Mitnehmerarmen 50 angelenkt (Fig. 2, 6 und 7).

In der dargestellten Arretierstellung wirkt sich somit eine zwischen dem Schwenkbügel 32 und der Befestigungsöse 24 eingeleitete Zugkraft in einer Dehnung der ersten Schraubenfeder 42 aus, die wiederum zu einer Verschiebung der beweglichen Achse 46 in den zweiten Langlöchern 48 nach oben führt. Diese nach oben-Bewegung wird über die Mitnehmerarme 50 in eine entsprechende translative Verschiebung der Schwenkachse 30 in den ersten Langlöchern 34 nach oben übertragen. Der Schwenkbügel 32 ist durch die Raste 36 in seiner Arretierstellung gesichert. Ab einer definierten Zugspannung bewegt sich der Schwenkbügel 32 durch die Bewegung der Schwenkachse 30 in den ersten Langlöchern 34 soweit nach oben, dass er aus der Blockierung durch die Raste 36 freikommt und in die in Fig. 6 dargestellte Auslösestellung schnappt, in welcher der Befestigungsring 12 des Haltegeschirrs freigegeben wird. Der Auslösemechanismus 14 arbeitet somit als zuverlässig auslösender Panikhaken.

Das Gehäuse 38 ist fest mit einer Betätigungsachse 52 verbunden, die unterhalb der stationären Achse 44 des Federmechanismus 40 angeordnet ist. Die Betätigungsachse 52 ist in dritten Langlöchern 54 in gegenüberliegenden Seitenwänden des Rahmens geführt. Gegen die Betätigungsachse 52 drückt das erste Ende einer zweiten Schraubenfeder 56, deren anderes Ende am Boden 58 des Rahmens 26 abgestützt ist. Das Gehäuse 38 mit der integrierten Raste 36 kann somit an dem Rahmen 26 nach unten geschoben werden, so dass die Raste 36 den Schwenkbügel 32 freigibt, so dass der Auslösemechanismus 14 manuell freigegeben werden kann.

Selbstverständlich ist die Federkonstante der zweiten Schraubenfeder 56 um ein Vielfaches kleiner als die der ersten Schraubenfeder 42, was verständlich ist, da die erste Schraubenfeder 42 für die Auslösung des Auslösemechanismus, d.h. für Auslösekräfte von 100N oder sogar einem Vielfachen davon konzipiert ist. Dahingegen soll die zweite Schraubenfeder 56 nur eine Gegenkraft beim Herunterdrücken oder -schieben des Gehäuses 38, z.B. mit dem Daumen, bereitstellen. Die entsprechenden Auslösekräfte liegen somit regelmäßig zwischen 0,1 und 5 N, insbesondere zwischen 0,2 und 2 N. Während die Figuren 1 bis 5 die Blockierposition des Gehäuses 38 und damit der Raste 36 zeigen, veranschaulichen die Figuren 6 und 7 das Gehäuse 38 in der manuell nach unten geschobenen Freigabeposition, in welcher der Schwenkhebel 32 nicht mehr durch die Raste 36 am Gehäuse 38 blockiert, sondern freigegeben ist.

Der erfindungsgemäße Auslösemechanismus 14 bietet eine zuverlässige Auslösung bei einer definierten Auslösezugkraft. Wenn man die stationäre Achse 44 durch einen oben beschriebenen Einstellmechanismus in Längsrichtung verstellbar in dem Rahmen 26 halten kann, kann man sogar die Auslösezugkraft einstellen.

Durch die Tatsache, dass zwei separate Schraubenfedern 42, 56 für die Auslösung und das manuelle Öffnen bereitgestellt werden, sind die Auslöse/Betätigungskräfte für beide Funktionen separiert und definiert wählbar. Gleichzeitig sind alle für die Auslösung und Betätigung relevanten Funktionselemente im Rahmen 26 und im Gehäuse 38 geschützt angeordnet.

Die Befestigungsöse 24 am unteren Ende des Rahmens 26 kann integriert im Rahmen 26 ausgebildet oder um eine vertikale Drehachse drehbar an diesem befestigt sein.

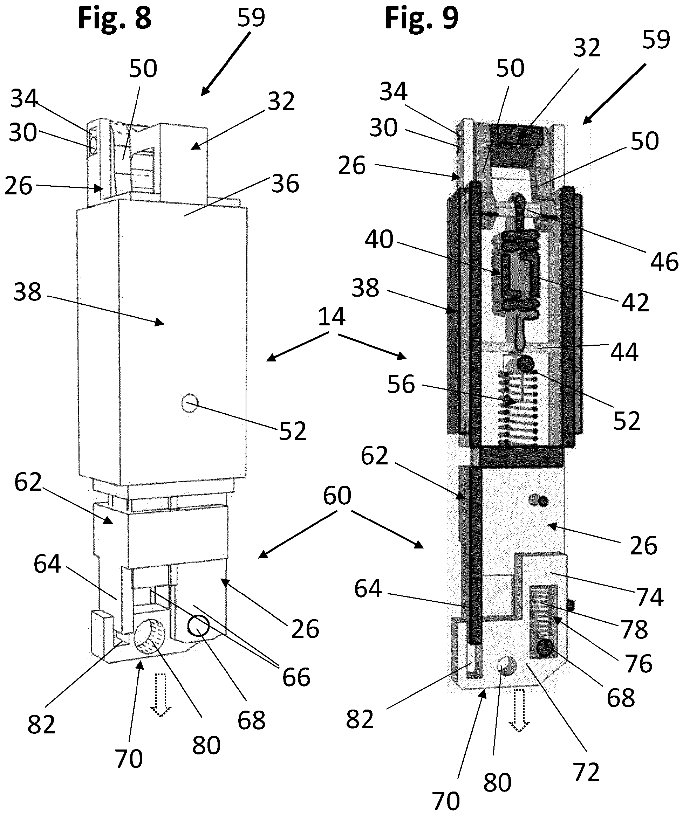

Eine weitere Ausführungsform der Erfindung ist in den Figuren 8 und 9 beschrieben. Diese Ausführungsform 59 enthält im oberen Bereich den Auslösemechanismus 14 der Figuren 1 bis 7. Anstelle der Befestigungsöse 24 ist jedoch am unteren Ende des Rahmens 26- ein Vorauslösemechanismus 60 angeordnet.

Der Vorauslösemechanismus 60 enthält ein mit dem Rahmen 26 fest verbundenes Rahmenteil 62, welches eine sich nach unten erstreckende Zunge 64 aufweist. An zwei gegenüberliegenden Seiten sind nach unten erstreckende Fortsätzen 66 des Rahmens 26 ausgebildet, an denen eine Drehachse 68 gehalten ist. Zwischen den beiden Fortsätzen 66 ist zudem ein L-förmiger Auslösehebel 70 beweglich gehalten. Der Auslösehebel 70 umfasst einen unteren horizontale Schenkel 72 und einen vertikalen Schenkel 74. Der vertikale Schenkel 74 enthält eine Längsführung 76, welche die Drehachse 68 aufnimmt. Über der Drehachse 68 ist in der Längsführung 76 (Fig. 9) des vertikalen Schenkels 74 eine Druckfeder 78 eingespannt.

Der horizontale Schenkel 72 enthält eine Befestigungsbohrung 80 zum Eingriff des Halteelements, z.B. der Halteschlaufe 22 des Halteelements 20(Fig. 1). Der horizontale Schenkel 72 weist zudem eine nach oben orientierte Aussparung 82 auf, die im nicht ausgelösten Zustand von der Zunge 64 durchsetzt ist.

Der Vorauslösemechanismus ist derart konzipiert, dass er kraftmäßig vor dem eigentlichen Auslösemechanismus 14 gemäß den Figuren 1 bis 7 auslöst. Die Auslösung erfolgt wie folgt.

Bei einem Zug auf die Befestigungsbohrung 80 nach unten verschiebt sich zuerst der Auslösehebel 70 gegen die Druckkraft der Druckfeder 78 nach unten. Die Druckfeder 78 wird dabei zwischen der Oberseite der Längsführung 76 und der fest mit den Forstsätzen 66 des Rahmens 26 verbundenen Drehachse 68 zunehmend eingespannt. Hierbei wird die nach oben ragende Aussparung 82 des horizontalen Schenkels 72 weiter nach unten von der Zunge 64 weggezogen, solange bis die Aussparung 82 von der Zunge 64 freikommt. Der Auslösehebel 70 dreht sich dann um die Drehachse 68 nach unten weg, so dass die Spannung, die zwischen dem Befestigungselement 12 und dem Halteelement 20 auf das Auslöseelement 14 ausgeübt wird, kurzzeitig reduziert wird. Die Verbindung der beiden jedoch bleibt aufgrund der festen Verbindung der Befestigungsbohrung 80 mit der Halteschlaufe 22 weiter aufrechterhalten. Sollte die Zugspannung trotzdem weiter ansteigen, löst irgendwann der Auslösemechanismus 14 in oben beschriebener Weise aus, womit dann das Befestigungselement 12 von dem Schwenkbügel 32 des Halteteils 28 freigegeben wird.

Die "zweistufige" Auslösung der Ausführungsform der Figuren 8 und 9 bietet somit eine kurzzeitige Verlängerung des Abstandes zwischen der Befestigungsbohrung 80 und dem Schwenkbügel 32, was zu einer Entlastung führt, bevor eine endgültige Auslösung und Trennung entsprechend einer Panikhaken-Funktion des Auslösemechanismus 14 einsetzt.

Die Erfindung ist nicht auf das dargestellte Ausführungsbeispiel beschränkt, sondern kann in beliebiger Weise variiert werden. So kann zum Beispiel der Schwenkbügel 28 als einfacher Bügel oder als Doppelbügel ausgebildet sein. Weiterhin können der Rahmen 26 und das Gehäuse 38 kreiszylinderförmig statt quaderförmig ausgebildet sein.

### Bezugszeichenliste:

- 10: Tierhalteeinrichtung
- 12: Befestigungselement - Befestigungsring am Haltegeschirr
- 14: vorzugsweise länglicher Auslösemechanismus - Panikhaken
- 16: erstes Ende des Auslösemechanismus/Rahmens
- 18: zweites Ende des Auslösemechanismus/Rahmens
- 20: Halteelement - Haltestange - Haltestrick
- 22: Halteschlaufe - Haltering am oberen Ende des Halteelements zur Verbindung mit dem Auslösemechanismus
- 24: Befestigungsteil - Befestigungsöse am zweiten Ende des Auslösemechanismus
- 26: Rahmen des Auslösemechanismus
- 28: Halteteil des Auslösemechanismus
- 30: Schwenkachse des Schwenkbügels
- 32: Schwenkbügel des Halteteils
- 34: erste Langlöcher im Rahmen in Längsrichtung - Führung der Schwenkachse des Schwenkbügels
- 36: integriert am Gehäuse ausgebildete Raste für den Schwenkbügel
- 38: an dem Rahmen längsverschiebbar gehaltenes Gehäuse
- 40: Federmechanismus
- 42: Schraubenfeder des Federmechanismus
- 44: (untere) stationäre Achse des Federmechanismus
- 46: (obere) bewegliche Achse des Federmechanismus
- 48: zweite Langlöcher in den Seitenwänden des Gehäuses - Führung der beweglichen Achse des Federmechanismus
- 50: Mitnehmerarme zur Verbindung von beweglicher Achse und Schwenkachse
- 52: Betätigungsachse des Gehäuses
- 54: dritte Langlöcher im Gehäuse - Führung der Betätigungsachse
- 56: zweite Schraubenfeder als Vorspannelement zur Vorspannung der Raste in Blockierstellung
- 58: Boden des Rahmens
- 60: Vorauslösemechanismus
- 62: Rahmenteil
- 64: nach unten ragende Zunge des Rahmenteils
- 66: sich nach unten erstreckende beabstandete Fortsätze des Rahmens
- 68: An den Fortsätzen gehaltene Drehachse
- 70: L-förmiger Auslösehebel
- 72: unterer horizontaler Schenkel des Auslösehebels
- 74: vertikaler Schenkel des Auslösehebels
- 76: Längsführung im vertikalen Schenkel, welcher die Drehachse aufnimmt
- 78: Druckfeder in der Längsführung, die sich oben an der Längsführung abstützt und unten an der Drehachse
- 80: Befestigungsbohrung für das Halteelement
- 82: nach oben weisende Aussparung im horizontalen Schenkel zur Aufnahme der Zunge

## Patentansprüche

1. Tierhalteeinrichtung (10), umfassend ein Haltegeschirr zum Festlegen an dem Tier, welches Haltegeschirr wenigstens ein Befestigungselement (12) zum Festlegen eines länglichen Halteelements (20) aufweist, wobei das Befestigungselement (12) und das Haltelement (20) über einen Auslösemechanismus (14) verbunden sind,
welcher Auslösemechanismus (14) einen Rahmen (26) mit einem daran ausgebildeten Befestigungsteil (24) und einem Halteteil (28) aufweist, welche zur Befestigung das Befestigungselements (12) und des Halteelements (20) an dem Auslösemechanismus (14) dienen, wobei das Halteteil (24) einen Schwenkbügel (32) umfasst, welches an dem Rahmen (26) um eine Schwenkachse (30) zwischen einer Arretierstellung und einer Auslösestellung schwenkbar gelagert ist, wobei die Arretierstellung des Schwenkbügels (32) durch eine in Verbindung mit dem Rahmen (26) angeordnete Raste (36) gesichert ist,
wobei die Schwenkachse (30) gegen die Kraft eines Federmechanismus (40) beweglich (34) an dem Rahmen (26) mittels einer Führung (34) geführt ist, so dass sich der Abstand der Schwenkachse (30) von dem Befestigungsteil (24) bei Aufbringen einer Zuglast zwischen Halteteil (28) und Befestigungsteil (24) ändert, wobei der Schwenkbügel (32) derart mit der Raste (36) zusammenwirkt, dass der Schwenkbügel (32) aufgrund der Bewegung der Schwenkachse (30) bei Überschreiten einer definierten Auslösezugkraft von der Raste (36) freikommt.

2. Tierhalteeinrichtung (10) nach Anspruch 1, **dadurch gekennzeichnet, dass** der Rahmen (26) länglich ausgebildet ist und eine in Längsrichtung erstreckende Führung (34) für die Schwenkachse (42) des Schwenkbügels (28) aufweist.

3. Tierhalteeinrichtung (10) nach Anspruch 2, **dadurch gekennzeichnet, dass** die Führung durch sich in Längsrichtung (I) des Rahmens (26) erstreckende erste Langlöcher (34) gebildet ist.

4. Tierhalteeinrichtung (10) nach Anspruch 2 oder 3, **dadurch gekennzeichnet, dass** an einem Längsende des Rahmens (26) das Halteteil (28) und an dessen anderem Längsende das Befestigungsteil (24) angeordnet ist.

5. Tierhalteeinrichtung (10) nach einem der vorhergehenden Ansprüche, **dadurch gekennzeichnet, dass** der Rahmen (26) den Federmechanismus (46) umschließt.

6. Tierhalteeinrichtung (10) nach einem der vorhergehenden Ansprüche, **dadurch gekennzeichnet, dass** der Federmechanismus (40) wenigstens ein Federelement (42) umfasst, das in dem Rahmen (26) mittels einer stationären Achse (44) und einer beweglichen Achse (46) gehalten ist.

7. Tierhalteeinrichtung (10) nach Anspruch 6, **dadurch gekennzeichnet, dass** die bewegliche Achse (46) mit der Schwenkachse (30) über wenigstens einen Mitnehmerarm (50) verbunden ist.

8. Tierhalteeinrichtung (10) nach einem der vorhergehenden Ansprüche, **dadurch gekennzeichnet, dass** die Raste (36) an dem Rahmen (26) in Zugrichtung zwischen einer Blockierstellung und einer Freigabestellung verschiebbar angeordnet ist.

9. Tierhalteeinrichtung nach Anspruch 8, **dadurch gekennzeichnet, dass** die Raste (36) über ein - vorzugsweise sich in Zugrichtung erstreckendes - Vorspannelement (56) in seine Blockierstellung vorgespannt ist.

10. Tierhalteeinrichtung (10) nach einem der vorhergehenden Ansprüche, **dadurch gekennzeichnet, dass** die Raste (36) in einem den Rahmen (26) umgebenden und an diesem verschiebbar gehaltenen Gehäuse (38) integriert ist.

11. Tierhalteeinrichtung (10) nach Anspruch 10, **dadurch gekennzeichnet, dass** das Gehäuse (38) als längliches rechteckiges oder kreiszylindrisches Metall- oder Faserverbundgehäuse (38) ausgebildet ist.

12. Tierhalteeinrichtung (10) nach einem der vorhergehenden Ansprüche, **dadurch gekennzeichnet, dass** Halteelement (20) ein Haltestrick oder eine Haltestange ist.

13. Tierhalteeinrichtung (10) nach einem der vorhergehenden Ansprüche, **dadurch gekennzeichnet, dass** das Geschirr ein strick-, riemen- und/oder kettenbasiertes Geschirr ist.

14. Tierhalteeinrichtung (10) nach einem der vorhergehenden Ansprüche, **dadurch gekennzeichnet, dass** das Haltegeschirr als Befestigungselement (12) einen Ring oder eine Öse aufweist.

15. Tierhalteeinrichtung (10) nach einem der vorhergehenden Ansprüche, **dadurch gekennzeichnet, dass** das Befestigungsteil (24) als Ring oder Öse ausgebildet ist.

16. Verwendung eines Auslösemechanismus (14) nach einem der vorhergehenden Ansprüche als Panikhaken einer Tierhalteeinrichtung (10).
